# EUROPEAN PATENT SPECIFICATION

(11) **EP 4 086 020 B1**
(45) Date of publication and mention of the grant of the patent: **03.09.2025**
(21) Application number: 22182828.8
(22) Date of filing: 24.10.2017
(51) Int. Cl.: B22D 29/00, B22C 9/02, B22C 13/08, B22C 9/10, B22C 9/24, B22D 29/04, B22D 27/04, B28B 1/00, F01D 5/16, G03F 7/00, B29C 64/124

(54) **INTEGRATED CASTING CORE-SHELL STRUCTURE FOR MAKING CAST COMPONENT WITH NON-LINEAR HOLES**
INTEGRIERTE KERN-SCHALE-GIESSSTRUKTUR ZUR HERSTELLUNG EINES GUSSTEILS MIT NICHTLINEAREN ÖFFNUNGEN
STRUCTURE NOYAU-ENVELOPPE DE MOULAGE INTÉGRÉE POUR LA FABRICATION DE COMPOSANT MOULÉ AVEC TROUS NON LINÉAIRES

(30) Priority: 13.12.2016 US 201615377787
(43) Date of publication of application: 09.11.2022
(62) Divisional of application: 17794194.5
(73) Proprietor: General Electric Company, Schenectady, NY 12345 (US)
(72) Inventor: GARAY, Gregory Terrence, Schenectady, 12345 (US); YANG, Xi, West Chester, 45209 (US)
(74) Representative: Hafner & Kohl PartmbB

(56) References cited:
- US-A1- 2010 068 033
- US-A1- 2016 221 262

## Description

### INTRODUCTION

The present disclosure generally relates to investment casting core-shell mold components and processes utilizing these components. The core-shell mold made in accordance with the present invention includes integrated ceramic filaments between the core and shell of the mold that can be utilized to form holes, i.e., effusion cooling holes, in the cast component made from these molds. The use of sufficient ceramic filaments between core and shell to both locate and provide leaching pathways for the core serpentine also enables the elimination of ball braze chutes. Ceramic filaments between the tip plenum core and the shell may also be provided to support a floating tip plenum, eliminating the need for traditional tip pins, and their subsequent closure by brazing. The filaments used in the molds of the present invention have a non-linear shape that forms non-linear holes in the cast component. The integrated core-shell molds provide useful properties in casting operations, such as in the casting of superalloys used to make turbine blades and stator vanes for jet aircraft engines or power generation turbine components.

### BACKGROUND

Many modern engines and next generation turbine engines require components and parts having intricate and complex geometries, which require new types of materials and manufacturing techniques. Conventional techniques for manufacturing engine parts and components involve the laborious process of investment or lost-wax casting. One example of investment casting involves the manufacture of a typical rotor blade used in a gas turbine engine. A turbine blade typically includes hollow airfoils that have radial channels extending along the span of a blade having at least one or more inlets for receiving pressurized cooling air during operation in the engine. The various cooling passages in a blade typically include a serpentine channel disposed in the middle of the airfoil between the leading and trailing edges. The airfoil typically includes inlets extending through the blade for receiving pressurized cooling air, which include local features such as short turbulator ribs or pins for increasing the heat transfer between the heated sidewalls of the airfoil and the internal cooling air.

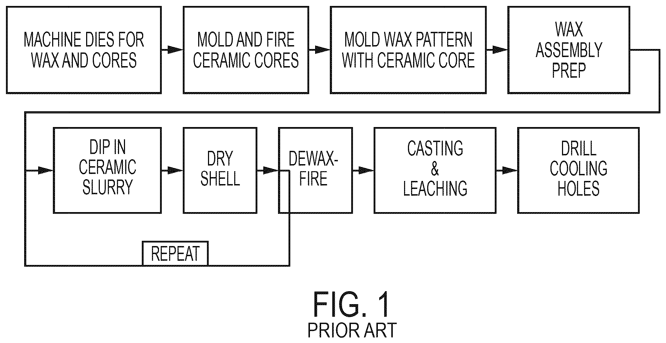

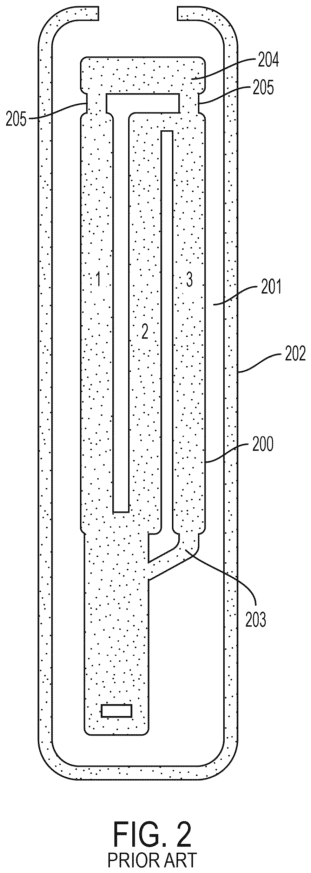

The manufacture of these turbine blades, typically from high strength, superalloy metal materials, involves numerous steps shown in FIG. 1. First, a precision ceramic core is manufactured to conform to the intricate cooling passages desired inside the turbine blade. A precision die or mold is also created which defines the precise 3-D external surface of the turbine blade including its airfoil, platform, and integral dovetail. A schematic view of such a mold structure is shown in FIG. 2. The ceramic core 200 is assembled inside two die halves which form a space or void therebetween that defines the resulting metal portions of the blade. Wax is injected into the assembled dies to fill the void and surround the ceramic core encapsulated therein. The two die halves are split apart and removed from the molded wax. The molded wax has the precise configuration of the desired blade and is then coated with a ceramic material to form a surrounding ceramic shell 202. Then, the wax is melted and removed from the shell 202 leaving a corresponding void or space 201 between the ceramic shell 202 and the internal ceramic core 200 and tip plenum 204. Molten superalloy metal is then poured into the shell to fill the void therein and again encapsulate the ceramic core 200 and tip plenum 204 contained in the shell 202. The molten metal is cooled and solidifies, and then the external shell 202 and internal core 200 and tip plenum 204 are suitably removed leaving behind the desired metallic turbine blade in which the internal cooling passages are found. In order to provide a pathway for removing ceramic core material via a leaching process, a ball chute 203 and tip pins 205 are provided, which upon leaching form a ball chute and tip holes within the turbine blade that must subsequently brazed shut.

The cast turbine blade may then undergo additional post-casting modifications, such as but not limited to drilling of suitable rows of film cooling holes through the sidewalls of the airfoil as desired for providing outlets for the internally channeled cooling air which then forms a protective cooling air film or blanket over the external surface of the airfoil during operation in the gas turbine engine. After the turbine blade is removed from the ceramic mold, the ball chute 203 of the ceramic core 200 forms a passageway that is later brazed shut to provide the desired pathway of air through the internal voids of the cast turbine blade. However, these post-casting modifications are limited and given the ever increasing complexity of turbine engines and the recognized efficiencies of certain cooling circuits inside turbine blades, more complicated and intricate internal geometries are required. While investment casting is capable of manufacturing these parts, positional precision and intricate internal geometries become more complex to manufacture using these conventional manufacturing processes. Accordingly, it is desired to provide an improved casting method for three dimensional components having intricate internal voids.

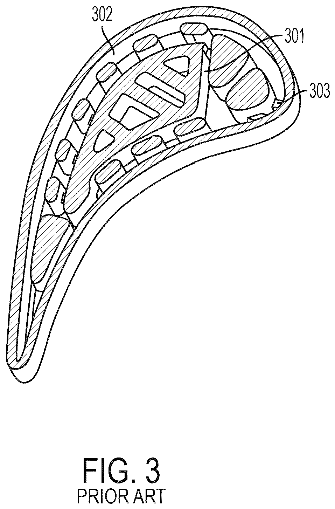

Methods for using 3-D printing to produce a ceramic core-shell mold are described in U.S. Patent No. 8,851,151 assigned to Rolls-Royce Corporation. The methods for making the molds include powder bed ceramic processes such as disclosed U.S. Patent No. 5,387,380 assigned to Massachusetts Institute of Technology, and selective laser activation (SLA) such as disclosed in U.S. Patent No. 5,256,340 assigned to 3D Systems, Inc. The ceramic core-shell molds according to the '151 patent are limited by the printing resolution capabilities of these processes. As shown in FIG. 3, the core portion 301 and shell portion 302 of the integrated core-shell mold is held together via a series of tie structures 303 provided at the bottom edge of the mold. Cooling passages are proposed in the '151 patent that include staggered vertical cavities joined by short cylinders, the length of which is nearly the same as its diameter. A superalloy turbine blade is then formed in the core-shell mold using known techniques disclosed in the '151 patent. After a turbine blade is cast in one of these core-shell molds, the mold is removed to reveal a cast superalloy turbine blade. From the document US 2016 221 262 A1 a system for fabricating three-dimensional objects is known, including an optical imaging system providing a light source and a photosensitive medium adapted to change states upon exposure to a portion of the light source from the optical imaging system. The document US 2010 068 033 A1 teaches a cooling system for a turbine airfoil of a turbine engine having at least one diffusion film cooling hole positioned in an outer wall defining the turbine airfoil.

There remains a need to prepare ceramic core-shell molds produced using higher resolution methods that are capable of providing fine detail cast features in the end-product of the casting process.

### SUMMARY

In one embodiment, the invention relates to a method of making a ceramic mold. The method includes steps of (a) contacting a cured portion of a workpiece with a liquid ceramic photopolymer; (b) irradiating a portion of the liquid ceramic photopolymer adjacent to the cured portion through a window contacting the liquid ceramic photopolymer; (c) removing the workpiece from the uncured liquid ceramic photopolymer. Steps (a) - (c) are repeated until a ceramic mold is formed. The ceramic mold has a (1) a core portion and a shell portion with at least one cavity between the core portion and the shell portion, the cavity adapted to define the shape of a cast component upon casting and removal of the ceramic mold, and (2) a plurality of filaments joining the core portion and the shell portion where each filament spans between the core and shell and defines a hole in the cast component upon removal of the mold, wherein at least one filament includes at least a portion having a non-linear geometry and a cross sectional area ranging from 0.01 to 2 mm². The process includes a step of pouring a liquid metal into a casting mold and solidifying the liquid metal to form the cast component, and then removing the mold from the cast component, this step preferably involves a combination of mechanical force and chemical leaching in an alkaline bath.

In one embodiment, the invention relates to a method of preparing a cast component. The method includes steps of pouring a liquid metal into a ceramic casting mold and solidifying the liquid metal to form the cast component, the ceramic casting mold comprising a (1) a core portion and a shell portion with at least one cavity between the core portion and the shell portion, the cavity adapted to define the shape of a cast component upon casting and removal of the ceramic mold, and (2) a plurality of filaments joining the core portion and the shell portion where each filament spans between the core and shell and defines a hole in the cast component upon removal of the mold, wherein at least one filament includes at least a portion having a non-linear geometry and a cross sectional area ranging from 0.01 to 2 mm²; and removing the ceramic casting mold from the cast component by leaching at least a portion of the ceramic core through the holes in the cast component provided by the filaments.

In one aspect, the cast component is a turbine blade or stator vane. Preferably the turbine blade or stator vane is used in a gas turbine engine in, for example, an aircraft engine or power generation. The turbine blade or stator vane is preferably a single crystal cast turbine blade or stator vane having a cooling hole pattern defined by the ceramic filaments mentioned above. Preferably, the filaments join the core portion and shell portion where each filament spans between the core and shell, the filaments having a cross sectional area ranging from 0.01 to 2 mm².

The large number of filaments used to form a cooling hole pattern may provide sufficient strength to support the tip core. If the tip filaments are made to support tip plenum core, they may be made larger, i.e., >2 mm cross section area, and a much lower number of filaments, or a single filament, could be used. Although two to four of these larger filaments is a desirable number. After casting, any holes or notches remaining in the tip plenum sidewalls as a result of the filaments may be brazed shut or incorporated into the turbine blade stator vane design, or the filaments may be placed outside the finish machined shape of the component to prevent the need for this.

In one aspect, the invention relates to a ceramic casting mold including a core portion and a shell portion with at least one cavity between the core portion and the shell portion, the cavity adapted to define the shape of a cast component upon casting and removal of the ceramic mold, and a plurality of filaments joining the core portion and the shell portion where each filament spans between the core and shell and defines a hole in the cast component defined by the core portion and an outer surface of the cast component upon removal of the mold, wherein at least one filament includes at least a portion having a non-linear geometry and a cross sectional area ranging from 0.01 to 2 mm². Preferably, the cast component is a turbine blade or stator vane and the plurality of filaments joining the core portion and shell portion define a plurality of cooling holes in the turbine blade or stator vane upon removal of the mold. The plurality of filaments joining the core portion and shell portion have a cross sectional area ranging from 0.01 to 2 mm². The ceramic may be a photopolymerized ceramic or a cured photopolymerized ceramic.

Preferably, the cast component is a turbine blade or stator vane and the plurality of filaments joining the core portion and shell portion define a plurality of cooling holes in the turbine blade or stator vane upon removal of the mold. The plurality of filaments joining the core portion and shell portion have a cross sectional area ranging from 0.01 to 2 mm². The ceramic may be a photopolymerized ceramic or a cured photopolymerized ceramic.

In one aspect, the invention relates to a single crystal metal turbine blade or stator vane having an inner cavity and an outer surface, a plurality of cooling holes providing fluid communication between the inner cavity and outer surface, the plurality of cooling holes having at least a portion having a non-linear geometry and a cross sectional area ranging from 0.01 to 2 mm².

Preferably the non-linear geometry reflects a non-linear geometry that forms an "S" shaped hole upon removal of the mold. In one aspect, the hole exits the surface at an angle of less than 20°. In another aspect, the hole exits the surface at an angle in the range of 5° to 15°.

### BRIEF DESCRIPTION OF THE DRAWINGS

FIG. 1 is a flow diagram showing the steps for conventional investment casting.
FIG. 2 is a schematic diagram showing an example of a conventional scheme for a core-shell mold with ball chute prepared by a conventional process.
FIG. 3 shows a perspective view of a prior art integrated core-shell mold with ties connecting the core and shell portions.
FIGS. 4, 5, 6 and 7 show schematic lateral sectional views of a device for carrying out successive phases of the method for direct light processing (DLP).
FIG. 8 shows a schematic sectional view along the line A-A of FIG. 7.
FIG. 9 shows a side view of an integrated core-shell mold with filaments connecting the core and shell portions.
FIG. 10 shows a side view of an integrated core-shell mold with non-linear filaments connecting the core and shell portions.
FIG. 11 shows a side view of a non-linear cooling hole in accordance with one aspect of the invention.
FIG. 12 shows a side view of a non-linear cooling hole in accordance with one aspect of the invention.

### DETAILED DESCRIPTION

The detailed description set forth below in connection with the appended drawings is intended as a description of various configurations and is not intended to represent the only configurations in which the concepts described herein may be practiced. The detailed description includes specific details for the purpose of providing a thorough understanding of various concepts. However, it will be apparent to those skilled in the art that these concepts may be practiced without these specific details. For example, the present invention provides a preferred method for making cast metal parts, and preferably those cast metal parts used in the manufacture of jet aircraft engines. Specifically, the production of single crystal, nickel-based superalloy cast parts such as turbine blades, vanes, and shroud components can be advantageously produced in accordance with this invention. However, other cast metal components may be prepared using the techniques and integrated ceramic molds of the present invention.

The present inventors recognized that prior processes known for making integrated core-shell molds lacked the fine resolution capability necessary to print filaments extending between the core and shell portion of the mold of sufficiently small size and quantity to result in effusion cooling holes in the finished turbine blade. In the case of earlier powder bed processes, such as disclosed in U.S. Patent No. 5,387,380 assigned to Massachusetts Institute of Technology, the action of the powder bed recoater arm precludes formation of sufficiently fine filaments extending between the core and shell to provide an effusion cooling hole pattern in the cast part. Other known techniques such as selective laser activation (SLA) such as disclosed in U.S. Patent No. 5,256,340 assigned to 3D Systems, Inc. that employ a top-down irradiation technique may be utilized in producing an integrated core-shell mold in accordance with the present invention. However, the available printing resolution of these systems significantly limit the ability to make filaments of sufficiently small size to serve as effective cooling holes in the cast final product.

The present inventors have found that the integrated core-shell mold of the present invention can be manufactured using direct light processing (DLP). DLP differs from the above discussed powder bed and SLA processes in that the light curing of the polymer occurs through a window at the bottom of a resin tank that projects light upon a build platform that is raised as the process is conducted. With DLP an entire layer of cured polymer is produced simultaneously, and the need to scan a pattern using a laser is eliminated. Further, the polymerization occurs between the underlying window and the last cured layer of the object being built. The underlying window provides support allowing thin filaments of material to be produced without the need for a separate support structure. In other words, producing a thin filament of material bridging two portions of the build object is difficult and was typically avoided in the prior art. For example, the '151 patent discussed above in the background section of this application used vertical plate structures connected with short cylinders, the length of which was on the order of their diameter. Staggered vertical cavities are necessitated by the fact that the powder bed and SLA techniques disclosed in the '151 patent require vertically supported ceramic structures and the techniques are incapable of reliably producing filaments. In addition, the available resolution within a powder bed is on the order of 1/8" resulting in a minimum feature cross sectional dimension on the order of 8 mm², making the production of traditional cooling holes impracticable. For example, round cooling holes generally have a diameter of less than 2 mm corresponding to a cooling hole area below 3.2 mm2. Production of a hole of such dimensions requires a resolution far below the size of the actual hole given the need to produce the hole from several voxels. This resolution is simply not available in a powder bed process. Similarly, stereolithography is limited in its ability to produce such filaments due to lack of support and resolution problems associated laser scattering. But the fact that DLP exposes the entire length of the filament and supports it between the window and the build plate enables producing sufficiently thin filaments spanning the entire length between the core and shell to form a ceramic object having the desired cooling hole pattern. Although powder bed and SLA may be used to produce filaments, their ability to produce sufficiently fine filaments as discussed above is limited.

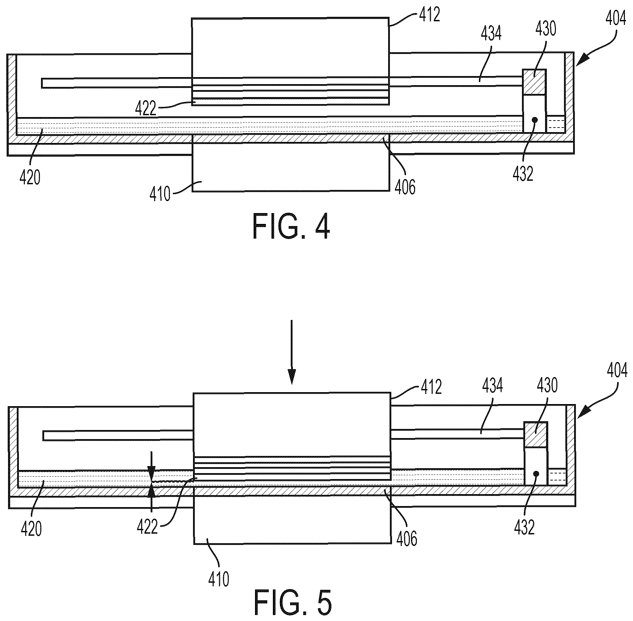

One suitable DLP process is disclosed in U.S. Patent No. 9,079,357 assigned to Ivoclar Vivadent AG and Technische Universitat Wien, as well as WO 2010/045950 A1 and US 2011310370, each of which are discussed below with reference to FIGS. 4-8. The apparatus includes a tank 404 having at least one translucent bottom portion 406 covering at least a portion of the exposure unit 410. The exposure unit 410 comprises a light source and modulator with which the intensity can be adjusted position-selectively under the control of a control unit, in order to produce an exposure field on the tank bottom 406 with the geometry desired for the layer currently to be formed. As an alternative, a laser may be used in the exposure unit, the light beam of which successively scans the exposure field with the desired intensity pattern by means of a mobile mirror, which is controlled by a control unit.

Opposite the exposure unit 410, a production platform 412 is provided above the tank 404; it is supported by a lifting mechanism (not shown) so that it is held in a height-adjustable way over the tank bottom 406 in the region above the exposure unit 410. The production platform 412 may likewise be transparent or translucent in order that light can be shone in by a further exposure unit above the production platform in such a way that, at least when forming the first layer on the lower side of the production platform 412, it can also be exposed from above so that the layer cured first on the production platform adheres thereto with even greater reliability.

The tank 404 contains a filling of highly viscous photopolymerizable material 420. The material level of the filling is much higher than the thickness of the layers which are intended to be defined for position-selective exposure. In order to define a layer of photopolymerizable material, the following procedure is adopted. The production platform 412 is lowered by the lifting mechanism in a controlled way so that (before the first exposure step) its lower side is immersed in the filling of photopolymerizable material 420 and approaches the tank bottom 406 to such an extent that precisely the desired layer thickness Δ (see FIG. 5) remains between the lower side of the production platform 412 and the tank bottom 406. During this immersion process, photopolymerizable material is displaced from the gap between the lower side of the production platform 412 and the tank bottom 406. After the layer thickness Δ has been set, the desired position-selective layer exposure is carried out for this layer, in order to cure it in the desired shape. Particularly when forming the first layer, exposure from above may also take place through the transparent or translucent production platform 412, so that reliable and complete curing takes place particularly in the contact region between the lower side of the production platform 412 and the photopolymerizable material, and therefore good adhesion of the first layer to the production platform 412 is ensured. After the layer has been formed, the production platform is raised again by means of the lifting mechanism.

These steps are subsequently repeated several times, the distance from the lower side of the layer 422 formed last to the tank bottom 406 respectively being set to the desired layer thickness Δ and the next layer thereupon being cured position-selectively in the desired way.

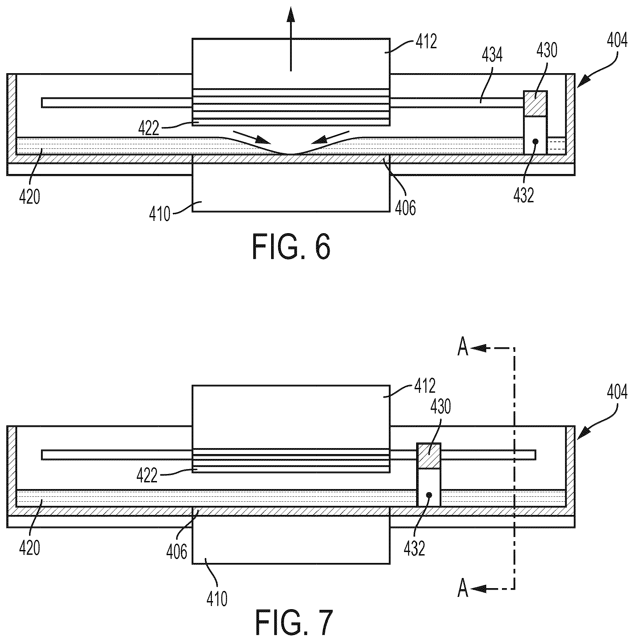

After the production platform 412 has been raised following an exposure step, there is a material deficit in the exposed region as indicated in FIG. 6. This is because after curing the layer set with the thickness Δ, the material of this layer is cured and raised with the production platform and the part of the shaped body already formed thereon. The photopolymerizable material therefore missing between the lower side of the already formed shaped body part and the tank bottom 406 must be filled from the filling of photopolymerizable material 420 from the region surrounding the exposed region. Owing to the high viscosity of the material, however, it does not flow by itself back into the exposed region between the lower side of the shaped body part and the tank bottom, so that material depressions or "holes" can remain here.

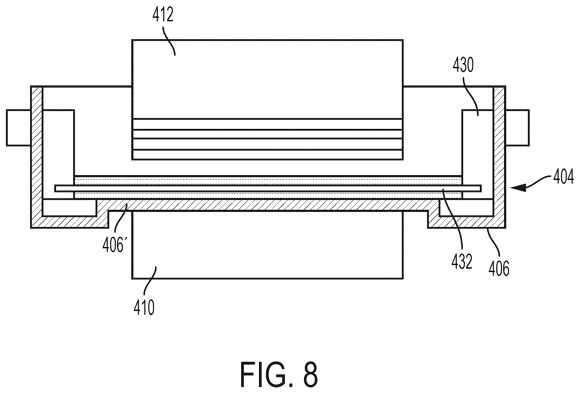

In order to replenish the exposure region with photopolymerizable material, an elongate mixing element 432 is moved through the filling of photopolymerizable material 420 in the tank. In the exemplary embodiment represented in FIGS. 4 to 8, the mixing element 432 comprises an elongate wire which is tensioned between two support arms 430 mounted movably on the side walls of the tank 404. The support arms 430 may be mounted movably in guide slots 434 in the side walls of the tank 404, so that the wire 432 tensioned between the support arms 430 can be moved relative to the tank 404, parallel to the tank bottom 406, by moving the support arms 430 in the guide slots 434. The elongate mixing element 432 has dimensions, and its movement is guided relative to the tank bottom, such that the upper edge of the elongate mixing element 432 remains below the material level of the filling of photopolymerizable material 420 in the tank outside the exposed region. As can be seen in the sectional view of FIG. 8, the mixing element 432 is below the material level in the tank over the entire length of the wire, and only the support arms 430 protrude beyond the material level in the tank. The effect of arranging the elongate mixing element below the material level in the tank 404 is not that the elongate mixing element 432 substantially moves material in front of it during its movement relative to the tank through the exposed region, but rather this material flows over the mixing element 432 while executing a slight upward movement.. The movement of the mixing element 432 from the position shown in FIG. 6, to, for example, a new position in the direction indicated by the arrow A, is shown in FIG. 7. It has been found that by this type of action on the photopolymerizable material in the tank, the material is effectively stimulated to flow back into the material-depleted exposed region between the production platform 412 and the exposure unit 410.

The movement of the elongate mixing element 432 relative to the tank may firstly, with a stationary tank 404, be carried out by a linear drive which moves the support arms 430 along the guide slots 434 in order to achieve the desired movement of the elongate mixing element 432 through the exposed region between the production platform 412 and the exposure unit 410. As shown in FIG. 8, the tank bottom 406 has recesses 406' on both sides. The support arms 430 project with their lower ends into these recesses 406'. This makes it possible for the elongate mixing element 432 to be held at the height of the tank bottom 406, without interfering with the movement of the lower ends of the support arms 430 through the tank bottom 406.

Other alternative methods of DLP may be used to prepare the integrated core-shell molds of the present invention. For example, the tank may be positioned on a rotatable platform. When the workpiece is withdrawn from the viscous polymer between successive build steps, the tank may be rotated relative to the platform and light source to provide a fresh layer of viscous polymer in which to dip the build platform for building the successive layers.

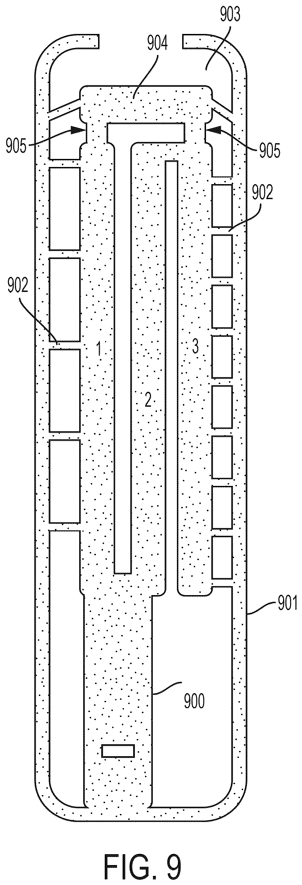

FIG. 9 shows a schematic side view of an integrated core-shell mold with filaments 902 connecting the core 900 and shell portions 901. By printing the ceramic mold using the above DLP printing process, the mold can be made in a way that allows the point of connections between the core and shell to be provided through filaments 902. Once the core-shell mold is printed, it may be subject to a post-heat treatment step to cure the printed ceramic polymer material. The cured ceramic mold may then be used similar to the traditional casting process used in the production of superalloy turbine blades. Notably because the filaments 902 are provided in a large quantity consistent with formation of a pattern of effusion cooling holes in the surface of a turbine blade, the need for a ball chute structure as shown in FIG. 2 may be eliminated. In this embodiment, the tip pins 905 connecting the tip plenum core 904 to the core 900 are retained. After removal of the ceramic mold, tip holes exist between the core 900 and tip plenum core 904 that may be subsequently brazed shut. However, the tip pins 905 may be eliminated, avoiding the need to braze shut tip holes connecting the core cavity with the tip plenum.

The filaments 902 are preferably cylindrical or oval shape but may be curved or non-linear. Their exact dimensions may be varied according to a desired film cooling scheme for a particular cast metal part. For example cooling holes may have a cross sectional area ranging from 0.01 to 2 mm². In a turbine blade, the cross sectional area may range from 0.01 to 0.15 mm², more preferably from 0.05 to 0.1 mm², and most preferably about 0.07 mm². In the case of a vane, the cooling holes may have a cross sectional area ranging from 0.05 to 0.2 mm², more preferably 0.1 to 0.18 mm², and most preferably about 0.16 mm². The spacing of the cooling holes is typically a multiple of the diameter of the cooling holes ranging from 2× to 10× the diameter of the cooling holes, most preferably about 4-7× the diameter of the holes.

The length of the filament 902 is dictated by the thickness of the cast component, e.g., turbine blade or stator vane wall thickness, and the angle at which the cooling hole is disposed relative to the surface of the cast component. The typical lengths range from 0.5 to 5 mm, more preferably between 0.7 to 1 mm, and most preferably about 0.9 mm. The angle at which a cooling hole is disposed is approximately 5 to 35° relative to the surface, more preferably between 10 to 20°, and most preferably approximately 12°. It should be appreciated that the methods of casting according to the present invention allow for formation of cooling holes having a lower angle relative to the surface of the cast component than currently available using conventional machining techniques.

The specific shape of a cooling hole made in accordance with the present invention is determined by the shape of the filament connecting the core to the shell portion of the mold. Because the process for making filaments allows complete control over the dimensions of the filament, the present invention can be used to make any shape cooling hole. Moreover, a single cast object may be provided with several kinds of cooling hole designs. The following describes several non-limiting examples for cooling hole designs that may be used in accordance with the present invention. One key characteristic of the cooling holes of the present invention is that they may be provided with a non-line-of-sight shape. In practice, cooling holes drilled through a completed turbine blade using electro discharge machining (EDM) were limited to cooling holes that were generally shaped to have a line of sight through the cast metal object. This is because the EDM apparatus has a generally linear shape and operates by drilling through outer surface of the cast object to reach the core cavity. It is generally not possible to drill from the core cavity side of the cast object because the core cavity is inaccessible.

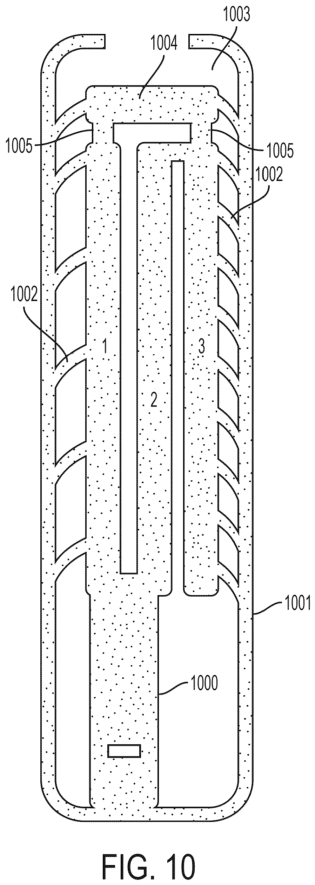

FIG. 10 shows a schematic side view of an integrated core-shell mold with non-linear filaments 1002 in accordance with the present invention connecting the core 1000 and shell portions 1001. By printing the ceramic mold using the above DLP printing process, the mold can be made in a way that allows the point of connections between the core and shell to be provided through non-linear filaments 1002. Once the core-shell mold is printed, it may be subject to a post-heat treatment step to cure the printed ceramic polymer material. The cured ceramic mold may then be used similar to the traditional casting process used in the production of superalloy turbine blades. Notably because the non-linear filaments 1002 are provided in a large quantity consistent with formation of a pattern of effusion cooling holes in the surface of a turbine blade, the need for a ball chute structure as shown in FIG. 2 may be eliminated. In this embodiment, the tip pins 1005 connecting the tip plenum core 1004 to the core 1000 are retained. After removal of the ceramic mold, tip holes exist between the core 1000 and tip plenum core 1004 that may be subsequently brazed shut. However, the tip pins 1005 may be eliminated, avoiding the need to braze shut tip holes connecting the core cavity with the tip plenum.

The non-linear filaments 1002 are preferably cylindrical or oval shape. Their exact dimensions may be varied according to a desired film cooling scheme for a particular cast metal part. For example cooling holes may have a cross sectional area ranging from 0.01 to 2 mm². In a turbine blade, the cross sectional area may range from 0.01 to 0.15 mm², more preferably from 0.05 to 0.1 mm², and most preferably about 0.07 mm². In the case of a vane, the cooling holes may have a cross sectional area ranging from 0.05 to 0.2 mm², more preferably 0.1 to 0.18 mm², and most preferably about 0.16 mm². The spacing of the cooling holes is typically a multiple of the diameter of the cooling holes ranging from 2× to 10× the diameter of the cooling holes, most preferably about 4-7× the diameter of the holes.

The length of the filament 1002 is dictated by the thickness of the cast component, e.g., turbine blade wall thickness, and the angle at which the cooling hole is disposed relative to the surface of the cast component. The typical lengths range from 0.5 to 5 mm, more preferably between 0.7 to 1 mm, and most preferably about 0.9 mm. The angle at which a cooling hole is disposed is approximately 5 to 35° relative to the surface, more preferably between 10 to 20°, and most preferably approximately 12°. It should be appreciated that the methods of casting according to the present invention allow for formation of cooling holes having a lower angle relative to the surface of the cast component that currently available using conventional machining techniques.

The present invention relates also to methods of making cast metal objects, in particular single crystal turbine blades and stators used in jet aircraft engines that have non-linear cooling holes such as the exemplary design shown in FIG. 10. The method begins with the production of the ceramic mold using DLP. The DLP process involves a repetition of steps of (a) contacting a cured portion of a workpiece with a liquid ceramic photopolymer; (b) irradiating a portion of the liquid ceramic photopolymer adjacent to the cured portion through a window contacting the liquid ceramic photopolymer; and (c) removing the workpiece from the uncured liquid ceramic photopolymer. The steps (a) - (c) are repeated until the ceramic mold shown in FIG. 10 is formed. After the mold is formed, liquid metal is poured into the casting mold and solidified to form the cast component. The ceramic mold is then removed from the cast component using, for example, combination of mechanical removal of the outer shell and leaching of the inner ceramic core.

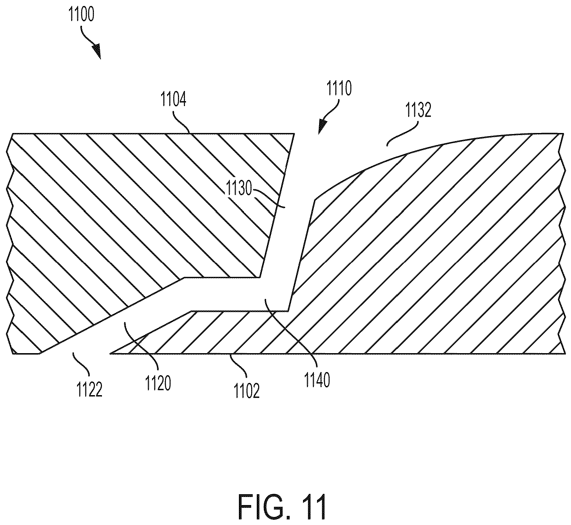

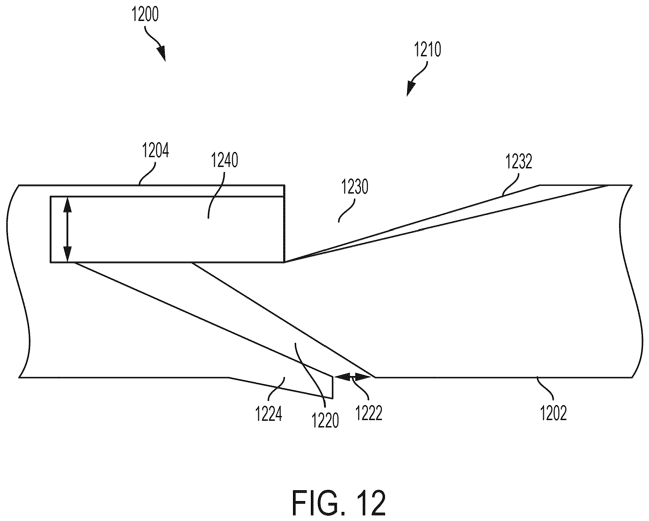

The specific geometry of the non-linear cooling hole filaments shown in FIG. 10 may be varied based on the needs for specific effusion cooling hole pattern to be placed in the turbine blade or stator. For example, the direction of the hole may be opposite that shown in FIG. 10 with holes aligned toward the top of the turbine blade. The filament may have a curvature that forms an "S" shaped hold upon removal of the mold. Alternatively, the holes may be aligned horizontally along the turbine blade such that they project inward or alternatively outward of the page. Given the flexibility possible for DLP processing, there are no limitations on the shape of the cooling hole. A few alternative exemplary cooling hole geometries are shown in FIGS. 11 and 12.

FIG. 11 shows a side view of a non-linear cooling hole that can be made in a cast object in accordance with one aspect of the invention. In this example, the effusion cooling hole 1110 extends from the inner surface 1102 of the cast component 1100 to the outer surface 1104 of the cast component 1100. The cooling hole 1110 has an upstream portion 1120 with an inlet 1122, an intermediate portion 1140, and a downstream portion 1130 with an outlet 1132. The cooling hole 1110 has a non-linear line of sight, meaning that no virtual, single straight line segment may be extended between the inlet 1122 and outlet 1132, given the areas of the inlet 1122 and outlet 1132, and the diameters, shapes, and angles of the respective portions 1120, 1130. The exemplary cooling hole geometry may be implemented by printing a filament in the reverse pattern of the cooling hole within a core-shell assembly such as shown in FIG. 10.

FIG. 12 shows an effusion cooling hole 1210 in accordance with an embodiment of the invention. The cooling hole 1210 extends from the inner surface 1202 of the cast component 1200, through the cast component 1200, to an outer surface 1204 of the cast component 1200. The cooling hole 1210 extends from an upstream portion 1220 with an inlet 1222, through a chamber 1240, to a downstream portion 1230 with an outlet 1232 to the outer surface of the cast object. The cooling hole 1210 of the present invention may have a chamber 1240 that is defined by having at least one height or width dimension that is greater than the minimum diameter of the inlet 1220. The cooling hole may have a ramp structure 1224 adjacent to the inlet 1220.

The chamber 1240 is designed to provide additional heat transfer capability to the cooling holes while serving as a trap for dust and particulate matter that makes its way into the supply of cooling air. This can be particularly advantageous when operating a jet aircraft in dusty or sandy environments. Preventing dust or sand from entering the flowpath can add useful life to downstream engine parts that may be damaged over time by dust or sand contamination. For example, turbine blades and stators in the low pressure turbine region of the jet aircraft engine may benefit from reduced contamination. In addition the ramp structure 1224 can optionally be included in the design to further reduce contamination by sand or dust.

After leaching, the resulting holes in the turbine blade from the core print filaments may be brazed shut if desired. Otherwise the holes left by the core print filaments may be incorporated into the design of the internal cooling passages. Alternatively, cooling hole filaments may be provided to connect the tip plenum core to the shell in a sufficient quantity to hold the tip plenum core in place during the metal casting step

After printing the core-shell mold structures in accordance with the invention, the core-shell mold may be cured and/or fired depending upon the requirements of the ceramic core photopolymer material. Molten metal is poured into the mold to form a cast object in the shape and having the features provided by the integrated core-shell mold. In the case of a turbine blade, the molten metal is preferably a superalloy metal that formed into a single crystal superalloy turbine blade using techniques known to be used with conventional investment casting molds.

In an aspect, the present invention relates to the core-shell mold structures of the present invention incorporated or combined with features of other core-shell molds produced in a similar manner.

This written description uses examples to disclose the invention, including the preferred embodiments, and also to enable any person skilled in the art to practice the invention, including making and using any devices or systems and performing any incorporated methods.

## Claims

1. A method of preparing a cast component comprising:
(a) pouring a liquid metal into a ceramic casting mold and solidifying the liquid metal to form the cast component, the ceramic casting mold comprising:
(1) a core portion (1000) and a shell portion (1001) with at least one cavity between the core portion (1000) and the shell portion (1001), the cavity adapted to define a shape of the cast component upon casting and removal of the ceramic casting mold, and
(2) a plurality of filaments (1002) joining the core portion (1000) and the shell portion (1001) wherein each filament spans between the core portion (1000) and the shell portion (1001) and defines a hole in the cast component, wherein at least one filament (1002) includes at least a portion having a non-linear geometry and a cross sectional area ranging from 0.01 to 2 mm²;
and
(b) removing the ceramic casting mold from the cast component by leaching at least a portion of the core portion through the holes in the cast component.

2. The method of claim 1, wherein the non-linear geometry forms an "S" shaped hole upon removal of the ceramic casting mold.

3. The method of claim 2, wherein an outlet of the "S" shaped hole exits a surface of the cast component at an angle in a range of less than 20°.

4. The method of any one of claims 2 or 3, wherein the outlet of the "S" shaped hole exits the surface of the cast component at an angle in a range of 5° to 15°.

5. A ceramic casting mold comprising:
a core portion (1000) and a shell portion (1001) with at least one cavity between the core portion (1000) and the shell portion (1001), the cavity adapted to define a shape of a cast component upon casting and removal of the ceramic casting mold, and
a plurality of filaments (1002) joining the core portion (1000) and the shell portion (1001) wherein each filament spans between the core portion (1000) and the shell portion (1001) and defines a hole in the cast component, wherein at least one filament (1002) includes at least a portion having a non-linear geometry and a cross sectional area ranging from 0.01 to 2 mm².

6. The ceramic casting mold of claim 5, wherein the non-linear geometry forms an "S" shaped hole upon removal of the ceramic casting mold.

7. The ceramic casting mold of claim 6, wherein an outlet of the "S" shaped hole exits a surface of the cast component at an angle of less than 20°.

8. The ceramic casting mold of any one of claims 6 or 7, wherein the outlet of the "S" shaped hole exits the surface of the cast component at an angle in a range of 5° to 15°.

9. A single crystal metal turbine blade or stator having an inner cavity and an outer surface, a plurality of cooling holes providing fluid communication between the inner cavity and outer surface, the plurality of cooling holes having at least a portion having a non-linear geometry and a cross sectional area ranging from 0.01 to 2 mm².

10. The single crystal metal turbine blade or stator of claim 9, wherein the non-linear geometry forms an "S" shaped hole.

11. The single crystal metal turbine blade or stator of claim 10, wherein an outlet of the S-shaped hole exits the outer surface at an angle of less than 20°.

12. The single crystal metal turbine blade or stator of claim 10, wherein the outlet of the S-shaped hole exits the outer surface at an angle in a range of 5° to 15°.

13. The single crystal metal turbine blade or stator of any one of claims 9-12, wherein the single crystal metal turbine blade or stator is a superalloy.

## Patentansprüche

1. Verfahren zur Herstellung eines Gussteils, bestehend aus:
a) Eingießen eines flüssigen Metalls in eine keramische Gießform und Erstarren des flüssigen Metalls zur Bildung des Gussteils, wobei die keramische Gießform Folgendes umfasst:
(1) ein Kernabschnitt (1000) und ein Schalenabschnitt (1001) mit mindestens einem Hohlraum zwischen dem Kernabschnitt (1000) und dem Schalenabschnitt (1001), wobei der Hohlraum angepasst ist, um beim Gießen und Entfernen der keramischen Gießform eine Form des Gussteils zu definieren,und
(2) mehrere Filamente (1002), die den Kernabschnitt (1000) mit dem Schalenabschnitt (1001) verbinden, wobei jedes Filament zwischen dem Kernabschnitt (1000) und dem Schalenabschnitt (1001) überspannt und ein Loch in der gegossenen Komponente definiert, wobei mindestens ein Filament (1002) mindestens einen Abschnitt mit einer nichtlinearen Geometrie und einer Querschnittsfläche von 0,01 bis 2 mm² umfasst; und
(b) Entfernen der Keramikgussform aus dem Gussteil, indem mindestens ein Teil des Kernabschnitts durch die Löcher im Gussteil ausgelaugt wird.

2. Verfahren nach Anspruch 1, wobei die nichtlineare Geometrie beim Entfernen der keramischen Gießform ein "S"-förmiges Loch bildet.

3. Verfahren nach Anspruch 2, bei dem ein Auslass des "S"-förmigen Lochs in einem Winkel von weniger als 20° aus einer Oberfläche des Gussteils austritt.

4. Verfahren nach einem der Ansprüche 2 oder 3, bei dem der Austritt des "S"-förmigen Lochs in einem Winkel von 5° bis 15° aus der Oberfläche des Gussteils austritt.

5. Eine keramische Gießform, bestehend aus:
einem Kernabschnitt (1000) und einem Schalenabschnitt (1001) mit mindestens einem Hohlraum zwischen dem Kernabschnitt (1000) und dem Schalenabschnitt (1001), wobei der Hohlraum angepasst ist, um beim Gießen und Entfernen der keramischen Gießform eine Form eines Gussteils zu definieren,und
eine Vielzahl von Filamenten (1002), die den Kernabschnitt (1000) mit dem Schalenabschnitt (1001) verbinden, wobei jedes Filament zwischen dem Kernabschnitt (1000) und dem Schalenabschnitt (1001) überspannt und ein Loch in der gegossenen Komponente definiert,
wobei mindestens ein Filament (1002) mindestens einen Abschnitt mit einer nichtlinearen Geometrie und einer Querschnittsfläche im Bereich von 0,01 bis 2 mm² umfasst.

6. Die keramische Gießform nach Anspruch 5, wobei die nichtlineare Geometrie beim Entfernen der Keramikgussform ein "S"-förmiges Loch bildet.

7. Die keramische Gießform nach Anspruch 6, wobei ein Auslass des "S"-förmigen Lochs eine Oberfläche des Gussteils in einem Winkel von weniger als 20° verlässt.

8. Die keramische Gießform nach einem der Ansprüche 6 oder 7, wobei der Austritt des "S"-förmigen Lochs die Oberfläche des Gussteils in einem Winkel von 5° bis 15° verlässt.

9. Eine einkristalline Metallturbinenschaufel oder ein Stator mit einem inneren Hohlraum und einer äußeren Oberfläche, einer Vielzahl von Kühllöchern, die eine Fluidkommunikation zwischen dem inneren Hohlraum und der äußeren Oberfläche bereitstellen, wobei die Vielzahl von Kühllöchern mindestens einen Abschnitt mit einer nichtlinearen Geometrie und einer Querschnittsfläche von 0,01 bis 2 mm² aufweist.

10. Die einkristalline Metallturbinenschaufel oder der Stator nach Anspruch 9, wobei die nichtlineare Geometrie ein 'S'-förmiges Loch bildet.

11. Die einkristalline Metallturbinenschaufel oder der Stator nach Anspruch 10, wobei ein Auslass des S-förmigen Lochs die Außenfläche in einem Winkel von weniger als 20° verlässt.

12. Die einkristalline Metallturbinenschaufel oder der Stator nach Anspruch 10, wobei der Auslass des S-förmigen Lochs die Außenfläche in einem Winkel von 5° bis 15° verlässt.

13. Die einkristalline Metallturbinenschaufel oder der Stator nach einem der Ansprüche 9-12, wobei die Einkristall-Metallturbinenschaufel oder der Stator eine Superlegierung ist.

## Revendications

1. Une méthode de préparation d'un composant moulé comprenant:
a) verser un métal liquide dans un moule de coulée en céramique et solidifier le métal liquide pour former l'élément moulé, le moule de coulée en céramique comprenant:
(1) une partie de noyau (1000) et une partie de coquille (1001) avec au moins une cavité entre la partie de noyau (1000) et la partie de coquille (1001), la cavité adaptée pour définir une forme de l'élément moulé lors de la coulée et de l'enlèvement du moule de coulée en céramique, et
(2) une pluralité de filaments (1002) joignant la partie centrale (1000) et la partie coquille (1001) dans laquelle chaque filament s'étend entre la partie centrale (1000) et la partie coquille (1001) et définit un trou dans le composant coulé, dans lequel au moins un filament (1002) comprend au moins une partie ayant une géométrie non linéaire et une section transversale comprise entre 0,01 et 2 mm^{2;} et
b) enlever le moule de coulée en céramique de l'élément coulé en lixiviant au moins une partie de la partie centrale à travers les trous de l'élément coulé.

2. La méthode de la revendication 1, dans laquelle la géométrie non linéaire forme un trou en forme de «S» lors de l'enlèvement du moule de coulée en céramique.

3. La méthode de la revendication 2, selon laquelle une sortie du trou en forme de «S» sort d'une surface de l'élément coulé à un angle inférieur à 20°.

4. La méthode de l'une quelconque des revendications 2 ou 3, dans laquelle la sortie du trou en forme de «S» sort de la surface de l'élément coulé selon un angle compris entre 5° et 15°.

5. Un moule de coulée en céramique comprenant:
une partie de noyau (1000) et une partie de coquille (1001) avec au moins une cavité entre la partie de noyau (1000) et la partie de coquille (1001), la cavité adaptée pour définir une forme d'un composant moulé lors de la coulée et de l'enlèvement du moule de coulée en céramique, et
une pluralité de filaments (1002) joignant la partie centrale (1000) et la partie de la coque (1001) dans laquelle chaque filament s'étend entre la partie centrale (1000) et la partie de la coque (1001) et définit un trou dans l'élément coulé, dans lequel au moins un filament (1002) comprend au moins une partie ayant une géométrie non linéaire et une section transversale comprise entre 0,01 et 2 mm².

6. Le moule de coulée en céramique de la revendication 5, dans lequel la géométrie non linéaire forme un trou en forme de «S» lors de l'enlèvement du moule de coulée en céramique.

7. Le moule de coulée en céramique de la revendication 6, dans lequel une sortie du trou en forme de «S» sort d'une surface de l'élément coulé à un angle inférieur à 20°.

8. Le moule de coulée en céramique de l'une quelconque des revendications 6 ou 7, dans lequel la sortie du trou en forme de «S» sort de la surface de l'élément coulé selon un angle compris entre 5° et 15°.

9. Une aube de turbine métallique à cristal unique ou stator ayant une cavité intérieure et une surface extérieure, une pluralité de trous de refroidissement assurant une communication fluide entre la cavité intérieure et la surface extérieure, la pluralité de trous de refroidissement ayant au moins une partie ayant une géométrie non linéaire et une section transversale comprise entre 0,01 et 2 mm².

10. La pale ou le stator de turbine en métal monocristallin de la revendication 9, dans lequel la géométrie non linéaire forme un trou en forme de «S».

11. La pale ou le stator de turbine en métal monocristallin de la revendication 10, dans lequel une sortie du trou en forme de S sort de la surface extérieure à un angle inférieur à 20°.

12. La pale ou le stator de turbine en métal monocristallin de la revendication 10, dans lequel la sortie du trou en forme de S sort de la surface extérieure selon un angle compris entre 5° et 15°.

13. La pale ou le stator d'une turbine en métal monocristallin de l'une des revendications 9-12, dans lequel la pale ou le stator d'une turbine en métal monocristallin est un superalliage.
